# EUROPÄISCHE PATENTSCHRIFT

(11) **EP 0 857 975 B1**
(45) Veröffentlichungstag und Bekanntmachung des Hinweises auf die Patenterteilung: **12.05.2004**
(21) Anmeldenummer: 98100486.4
(22) Anmeldetag: 13.01.1998
(51) Int. Cl.: G01N 35/04

(54) **Analysegerät für Körperflüssigkeit**
Apparatus for analysis of body fluids
Appareil pour l'analyse des liquides corporels

(30) Priorität: 10.02.1997 DE 29702276 U
(43) Veröffentlichungstag der Anmeldung: 12.08.1998
(73) Patentinhaber: Behnk, Holger, D-22417 Hamburg (DE)
(72) Erfinder: Behnk, Holger, D-22417 Hamburg (DE)
(74) Vertreter: Glawe, Delfs, Moll & Partner

(56) Entgegenhaltungen:
- EP-A- 0 502 638
- EP-A- 0 589 528
- US-A- 3 322 958
- PATENT ABSTRACTS OF JAPAN vol. 013, no. 159 (P-858), 18.April 1989 -& JP 63 317773 A (HITACHI LTD), 26.Dezember 1988,

## Beschreibung

Die vorliegende Erfindung betrifft ein Gerät zum Analysieren von Körperflüssigkeiten, die in mit einer von außen lesbaren Identifaktionsmarkierung versehenen Röhrchen angeordnet sind, mit positiver Probenidentifikation an der Position, an der eine Flüssigkeitsmenge zur Analyse entnommen wird, wobei die Röhrchen in einen drehbaren Rotor einsetzbar sind.

In Labors werden große Mengen von Proben von Körperflüssigkeiten, insbesondere Blut aber auch Urin und andere Körperflüssigkeiten untersucht. Diese Flüssigkeiten sind in Probenröhrchen enthalten, aus denen mit Hilfe von Pipettiereinrichtungen Teilmengen entnommen werden, damit eine oder mehrere Analysen durchgeführt werden können. Dies geschieht im wesentlichen automatisch. Das große Problem ist dabei die positive Identifikation. Man muß selbstverständlich sicher sein, daß die Analysendaten der richtigen Probe und damit dem richtigen Patienten zugeordnet werden.

Zu diesem Zweck ist es bekannt, die Röhrchen mit einer automatisch lesbaren Markierung, z. B. einem Strichcode zu versehen. Bei einem vorbekannten Gerät werden die Röhrchen hintereinander in einer Reihe in einem schubladenartigen Gestell angeordnet und in das Gerät eingeschoben, wobei die einzelnen Markierungen beim Einschieben durch eine Identifikationseinrichtung identifiziert werden, indem der Strichcode abgelesen wird. Eine solche Einrichtung vermag keine 100%ige Sicherheit zu geben, da die Gestelle mit den Röhrchen möglicherweise nicht richtig eingeschoben sind oder nach dem Einschieben ein Röhrchen ausgewechselt werden könnte, was von dem Gerät nicht bemerkt würde, da die Identifizierung vorher, nämlich beim Einschieben der Röhrchenreihe bereits erfolgt ist.

Bei einem anderen Gerät wird gleichzeitig mit der Identifizierung aus dem Probenröhrchen die Flüssigkeit mit Hilfe einer Pipette in ein weiteres Röhrchen eingebracht, das sich in einem geschlossen Karussell befindet. Hierdurch ist eine positive Identifikation sichergestellt, da aus dem Karussell keine Probenröhrchen entnommen werden können. Es tritt aber das Problem auf, daß pro Körperflüssigkeit zwei Probenröhrchen benutzt werden müssen, was erhöhten Abfall bedeutet.

Es ist weiter bekannt, die Röhrchen kettenförmig anzuordnen und dabei den Teil der Kette, bei dem die Probenentnahme erfolgt, so durch einen nach oben geschlossen Raum zu führen, daß kein Röhrchen entnommen werden kann. Die Identifikation erfolgt während der Probenentnahme mit der Pipette, so daß positive Identifikation sichergestellt ist. Eine solche Kette ist aber kompliziert, insbesondere wenn mehrere Analysen an derselben Probe durchgeführt werden sollen. Wird durch die Analyse festgestellt, daß wegen kritischer Werte eine weitere Analyse durchgeführt werden soll, so befindet sich das entsprechende Röhrchen nicht mehr an der Probenentnahmestelle und muß dann von Hand erneut an den Anfang der Kette eingesetzt werden. Auch dies ist sehr kompliziert. Schließlich ist es bekannt, die Röhrchen in einem Karussell oder Rotor einzusetzen, wobei im Moment der Probenentnahme die Identifikation erfolgt Prospekt CDAG-A-MATE MTW II der Firma Organon Teknika bv. Es ist zwar die positive Identifikation sichergestellt. Nach Beendigung der Messungen müssen aber die Röhrchen einzeln aus dem Rotor herausgenommen werden oder aber es muß der Rotor, der auf einer Achse sitzt, nach oben herausgenommen werden, damit die Röhrchen entsorgt werden können. Dies ist sehr kompliziert. Weiter tritt dabei das Problem auf, daß nach Beendigung der Analysen das Auswechseln erfolgen muß. Ist die Bedienungsperson dann gerade mit anderen Tätigkeiten beschäftigt, was in der Regel der Fall sein wird, so steht das Gerät einige Zeit ungenutzt herum, bis bemerkt wird, daß neue Röhrchen eingesetzt werden müssen. Dieser Zeitverlust bedeutet dann, daß das Gerät weniger wirtschaftlich ausgenutzt werden kann und möglicherweise Überstunden gemacht werden müssen, um die Analysen des Tages planmäßig zu beenden.

Die Aufgabe der Erfindung besteht in der Schaffung eines Geräts, bei dem die positive Identifikation sichergestellt ist, bei dem sich aber unerwünschte Leerlaufzeiten ohne weiteres vermeiden lassen und mit dem schnell eine Anpassung an geänderte Analyseerfordernisse möglich ist.

Die erfindungsgemäße Lösung ist im Anspruch 1 dargestellt. Das Gerät weist mindestens *zwei Rotoren*, *die schubladenartig in das Gerät einschiebbar sind, und für jeden Rotor ein seitlich* *angeordnetes Zahnrad auf, über das der entsprechende Rotor antreibbar ist und das in die am Umfang des Rotors angeordneten Beobachtungsschlitze eingreift, durch die die Identifikation der Röhrchen erfolgt.*

Es ist also nicht ein Rotor vorgesehen, sondern mindestens zwei Rotoren. Im Normalfalle wird man auch mit zwei Rotoren auskommen. Diese müssen nicht mühsam nach oben herausgenommen werden, wobei dann auch noch die Verbindung mit dem von einer Mittelachse von unten her erfolgenden Antrieb gelöst werden muß. Die Rotoren sind vielmehr schubladenartig in das Gerät einschiebbar und aus demselben wieder herausziehbar. Durch dieses seitliche Herausziehen und Einschieben besteht auch nicht die Gefahr, daß man die über den Röhrchen und den Rotoren angeordnete und sich hin- und herbewegende Pipettiereinheit berührt oder beschädigt. Die Rotoren sind dabei in die erforderliche Drehbewegung durch ein seitlich angeordnetes Zahnrad antreibbar, das an die am Umfang des Rotors angeordneten Beobachtungsschlitze eingreift, durch die die Identifikation der Röhrchen erfolgt. Zweckmäßigerweise ist die Anordnung dabei so getroffen, daß das Zahnrad leer mitläuft, wenn ein Rotor eingeschoben oder herausgezogen wird. Er kommt so ohne Schwierigkeiten in Eingriff oder außer Eingriff mit dem Beobachtungsschlitzen. Da diese Beobachtungsschlitze ohnehin vorgesehen sein müssen, sind am Rotor auch keine aufwendigen zusätzlichen Einrichtungen vorzusehen.

Zweckmäßigerweise sind die Rotoren am Umfang mit einer durch die Identifikationseinrichtung lesbaren Markierung für eine Bezugsstellung (Nullstellung) versehen.

Wenn ein neuer Rotor eingeschoben worden ist und die Starttaste betätigt ist, so wird mit Hilfe des Zahnrads, das von einem entsprechenden Motor, insbesondere einem Schrittmotor angetrieben wird, der Rotor solange gedreht, bis die Markierung für die Bezugsstellung (Nullstellung) detektiert wird. Ausgehend von dieser Bezugsstellung werden dann die einzelnen Beobachtungsschlitze durch Antrieb des Zahnrads angefahren und dort die Markierung identifiziert und abgespeichert. Kann an dieser Stelle keine Markierung identifiziert werden, so wird der Rotor ein wenig mit Hilfe des Schrittmotors hin- und herbewegt, bis die Markierung gefunden ist. Selbstverständlich wird durch die Identifikationseinrichtung auch festgestellt, wenn sich an einem Platz kein Röhrchen befindet. Auf jeden Fall kann aber auf diese Weise genau festgestellt werden, an welchem Platz des Rotors sich welches Röhrchen befindet, so daß gezielt ein solches Röhrchen in die Entnahmestellung gebracht werden kann, ohne daß erst alle Markierungen der Röhrchen abgelesen werden müssen. Während der Entnahme findet dann die Identifikation statt, so daß keine Identifikationsfehler auftreten können.

Vorteilhafterweise sind die Zahnräder mit einem Positionssensor versehen, der die einzelnen Zähne abtastet, so daß die Bewegung des Zahnrads sehr genau geregelt werden kann.

Im Rotor können zwei konzentrisch kreisförmig angeordnete Reihen von Aufnahmeöffnungen für Röhrchen vorgesehen sein, die durch die Identifikationseinrichtung identifizierbar sind. Die Identifizierung der inneren Röhrchen erfolgt dabei durch den Zwischenraum zwischen zwei äußeren Röhrchen. Vorteilhafterweise ist innen eine dritte kreisförmige und konzentrisch angeordnete Reihe für Röhrchen vorgesehen, die für außerplanmäßige Untersuchungen, z. B. Notfälle vorgesehen ist. Hier kann dann ein Röhrchen in einen bestimmten Platz eingesetzt werden, dessen Position (Nummer) von Hand in das Gerät eingegeben werden kann, so daß hier sehr schnell eine Messung durchgeführt werden kann.

Die Identifikation dieses Röhrchens wird mit einem Handscanner eingelesen oder von Hand eingegeben.

Zweckmäßigerweise weist das Gerät einen Rechner auf. Wenn ein solcher vorhanden ist, ist das Gerät zweckmäßigerweise auch an einen externen Rechner anschließbar, der Daten und Programme für die durchzuführenden Analysen aufweist. Beim anfänglichen Abtasten aller Probenröhrchen werden die Positionen derselben im Rotor in den externen Rechner eingegeben, der dann die gesamten Analysevorgänge verwalten kann.

Der wesentliche Vorteil des erfindungsgemäßen Geräts ist es aber, daß Leerlaufzeiten ohne weiteres vermieden werden können. Wenn die Analysen der Röhrchen in einem Rotor beendet sind, schaltet das Gerät auf den anderen oder einen weiteren Rotor ein, der neu mit Röhrchen bestückt ist und der bereitgeschaltet ist. Es kann dann irgendwann, während mit diesem neuen Rotor gearbeitet wird, der alte Rotor entnommen, die Röhrchen ausgewechselt und der Rotor wieder in das Gerät eingesetzt werden. Der herausnehmbare Rotor kann dabei auch als Transportmittel dienen, um die Röhrchen vom Ort, wo sie angeliefert oder vorbehandelt sind, z. B. in einer Zentrifuge, zum erfindungsgemäßen Gerät zu transportieren.

Es gibt Röhrchen unterschiedlicher Länge. Um den Rotor an Röhrchen einer anderen Länge anzupassen, weist er vorteilhafterweise einen höhenverstellbaren Boden auf. Dieser höhenverstellbare Boden ist zweckmäßigerweise durch eine Schraube an einer Mittelsäule in unterschiedlichen Höhen arretierbar, die durch einen der Beobachtungsschlitze zugänglich ist.

Die Höhenverstellung des Bodens zur Anpassung an unterschiedliche Röhrchengrößen findet bei einer anderen Ausführungsform durch eine oben am Rotor angebrachte Handhabe statt, die mit einer Schraubenstange verbunden ist, die in einen Gewindeabschnitt im Boden eingreift. Die Höhenverstellung des Bodens kann durch einfaches Drehen an der Handhabe bewirkt werden. Die Handhabe kann dabei so ausgebildet sein, daß sie Teil einer Halterung zum Einsetzen des Rotors in eine Zentrifuge ist.

Um das Einschieben zu erleichtern und eine sichere verdrehungsfreie Arbeitsstellung im Gerät zu erreichen, ist zweckmäßigerweise vorgesehen, daß die Rotoren in Halterungen eingesetzt sind, die eine flache Vorderseite, seitliche nach vorne zusammenlaufende Zentrierungsflächen und eine Handhabe aufweisen.

Bei einer anderen Ausführungsform sind die Halterungen vorne halbrund. Die winkelmäßige Festlegung erfolgt dabei durch eine Ausnehmung, die mit einem Vorsprung am Gerät zusammenwirkt, der bei richtiger Winkelpositionierung in die Ausnehmung eingreift. An diesem Vorsprung beifindet sich eine federbelastete Kugel, die nach richtigem Einsetzen des Rotors in der Ausnehmung einschnappt, so daß der Rotor auf einfache Weise eingeführt werden kann, trotzdem aber sicher gehalten wird.

Es ist auch möglich, ein Röhrchen nachträglich in einen freien Platz einzustellen. Der Rotor sucht dann unter einmaliger Drehung dieses Röhrchen und ordnet es zu. Die Analysen, die durchgeführt werden sollen, werden vom externen Rechner mitgeteilt oder, falls dieser nicht vorhanden ist, per Tastatur eingegeben.

Die Erfindung wird im folgenden anhand einer vorteilhaften Ausführungsform unter Bezugnahme auf die beigefügten Zeichnungen beispielsweise beschrieben. Es zeigen:
- Fig. 1: in Draufsicht eine Ausführungsform des erfindungsgemäßen Geräts;
- Fig. 2: in Draufsicht einen Rotor mit Halterung;
- Fig. 3: in schematischer Darstellung von unten den Antrieb des Rotors;
- Fig. 4: in seitlicher Draufsicht den Rotor;
- Fig. 5: eine andere Ausführungsform des erfindungsgemäßen Geräts in ähnlicher Darstellung wie in Fig. 1;
- Fig. 6: ein Detail der Ausführungsform der Fig. 5;
- Fig. 7: im Schnitt eine Ausführungsform für die Höhenverstellung des Bodens des Rotors;
- Fig. 8: im Schnitt eine andere Ausführungsform für die Höhenverstellung des Rotors;
- Fig. 9: die Halterung ohne eingesetzten Rotor;
- Fig. 10: die Halterung mit eingesetzten Rotor.

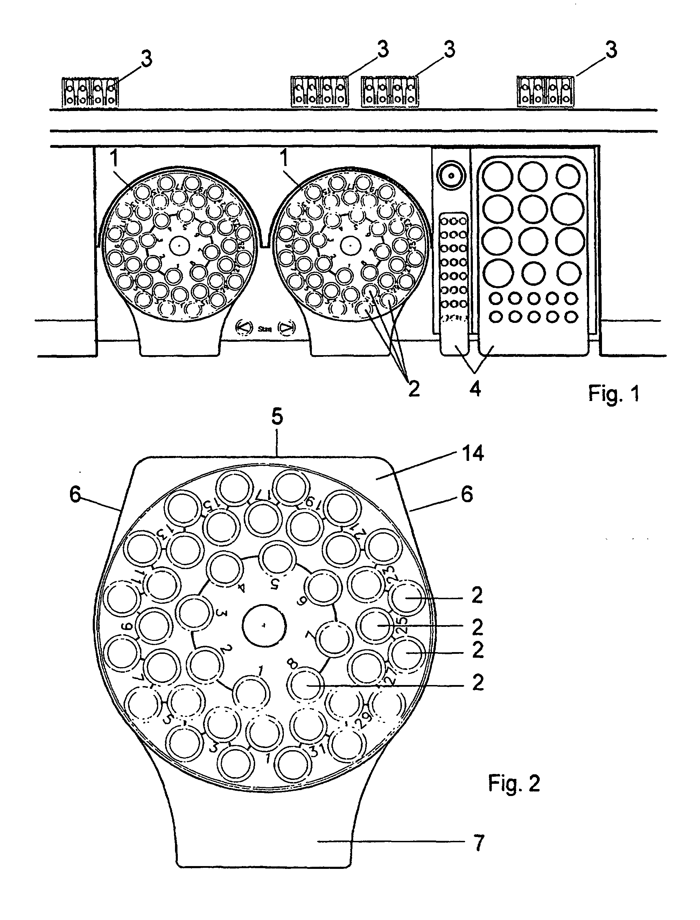

In Fig. 1 ist das erfindungsgemäße Gerät gezeigt, in das zwei Rotoren 1 eingesetzt sind. In diesen Rotoren befinden sich in Aufnahmeöffnungen 2 nicht gezeigte Röhrchen mit der zu untersuchenden Körperflüssigkeit. Aus einem Röhrchen, das gleichzeitig identifiziert wird, wird mit Hilfe einer Pipettiereinrichtung eine gewisse Menge Körperflüssigkeit entnommen und in eine Küvette 3 eingebracht. Außerdem werden ein oder mehrere Reagenzien aus einer Einheit 4 durch eine Pipette entnommen und in die Küvette 3 eingefüllt. Diese Küvette wird dann anschließend zu einer Untersuchungsstation weitertransportiert.

Die Rotoren 1 sind in das Gerät einschiebbar. Ein Rotor mit neuen Röhrchen kann in das Gerät eingeschoben werden, während dieses Gerät noch die Röhrchen des anderen Rotors abarbeitet. Anschließend wird dann die Start-Taste für den entsprechenden Rotor 1 gedrückt, damit das Gerät nach Beendigung der Arbeiten an den Röhrchen des einen Rotors mit der Bearbeitung der Röhrchen des anderen Rotors fortfahren kann.

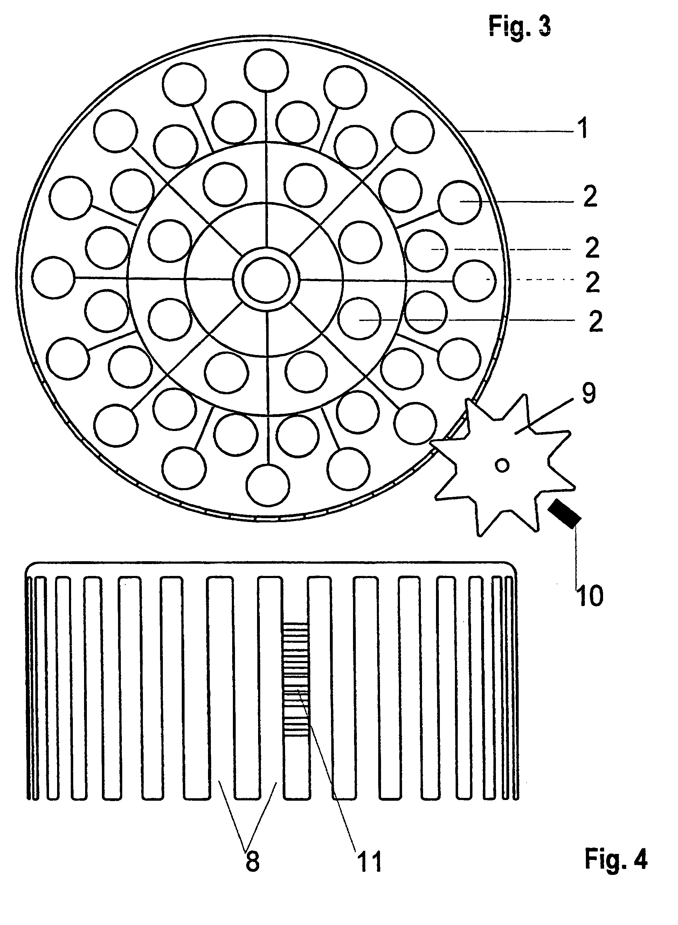

Der Rotor 1 ist in Fig. 2 von oben gezeigt. Er ist in einer Halterung 14 angeordnet, die vorne eine ebene Anschlagfläche 5, seitlich Schrägflächen 6 zur Zentrierung und hinten eine Handhabe 7 aufweist. Die Aufnahmeöffnungen 2 für die Röhrchen sind in drei konzentrischen Reihen angeordnet und numeriert. Für die beiden äußeren Reihen kann eine automatische Identifikation durch seitliche Beobachtungsschlitze 8 erfolgen, die z. B. in Fig. 4 gezeigt sind. Mit Hilfe dieser Beobachtungsschlitze 8 erfolgt auch die Drehung des Rotors 1 mit Hilfe eines Zahnrads 9, das in Fig. 3 gezeigt ist, das mit einem Motor, insbesondere einem Schrittmotor verbunden ist und beim Einschieben oder Herausziehen des Rotors leerläuft, so daß es mit einem Beobachtungsschlitz 8 in Eingriff kommen kann.

Beim Zahnrad befindet sich ein Positionssensor 10, mit dem die Zähne des Zahnrads erfaßt werden.

Wie gesagt erfolgt die Identifizierung der Markierung, insbesondere der Strichcodes der in den Figuren nicht gezeigten Röhrchen durch die Beobachtungsschlitze 8 genau an der Stelle, an der die Probenentnahme stattfindet. Wenn ein neuer Rotor 1 eingesetzt ist, so wird er zunächst solange gedreht, bis eine Markierung 11, die die Nullstellung bildet, von der Identifikationseinrichtung erfaßt wird. Anschließend werden dann alle Röhrchen in den beiden äußeren kreisförmigen Reihen "inventarisiert", um so eine eindeutige Beziehung zwischen einem individuellen Röhrchen und seinem Platz im Rotor herzustellen, so daß für erneute Untersuchungen oder beliebige Untersuchungsreihen jederzeit ein gewünschtes Röhrchen schnell angefahren werden kann. In der innersten Reihe können für Notfälle oder andere außerplanmäßige Untersuchungen Röhrchen eingesetzt werden, die dann allerdings nicht mehr automatisch identifiziert werden können.

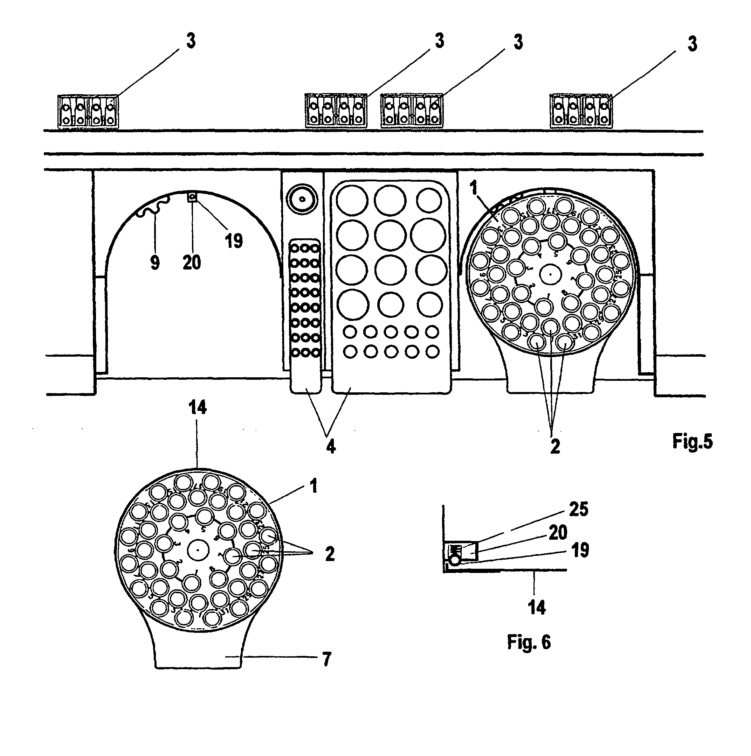

In Fig. 5 ist eine zweite Ausführungsform gezeigt, bei der sich die Reagenzieneinheit 4 in der Mitte zwischen den beiden Rotoren 1 befindet. Einer dieser Rotoren 1 ist außerhalb des Geräts gezeigt. In der Ausnehmung, in die der Rotor hineingeschoben werden kann, erkennt man das Zahnrad 9 sowie einen Vorsprung 20 mit einer durch eine Feder 25 belasteten Kugel 19 (siehe Fig. 6). Die Halterung 14 weist vorne (am Ort des Bezugszeichens 14 beim linken Rotor 1 in Fig. 5) eine Ausnehmung auf, die so mit dem Vorsprung 20 zusammenpaßt, daß die Halterung 14 nur winkelrichtig eingesetzt werden kann und winkelmäßig festgehalten wird. Die federbelastete Kugel 19 rastet dann in der Ausnehmung ein, so daß die Halterung 14 und damit der Rotor auf einfache Weise, aber doch sicher im Gerät festgesetzt wird und leicht wieder herausgezogen werden kann.

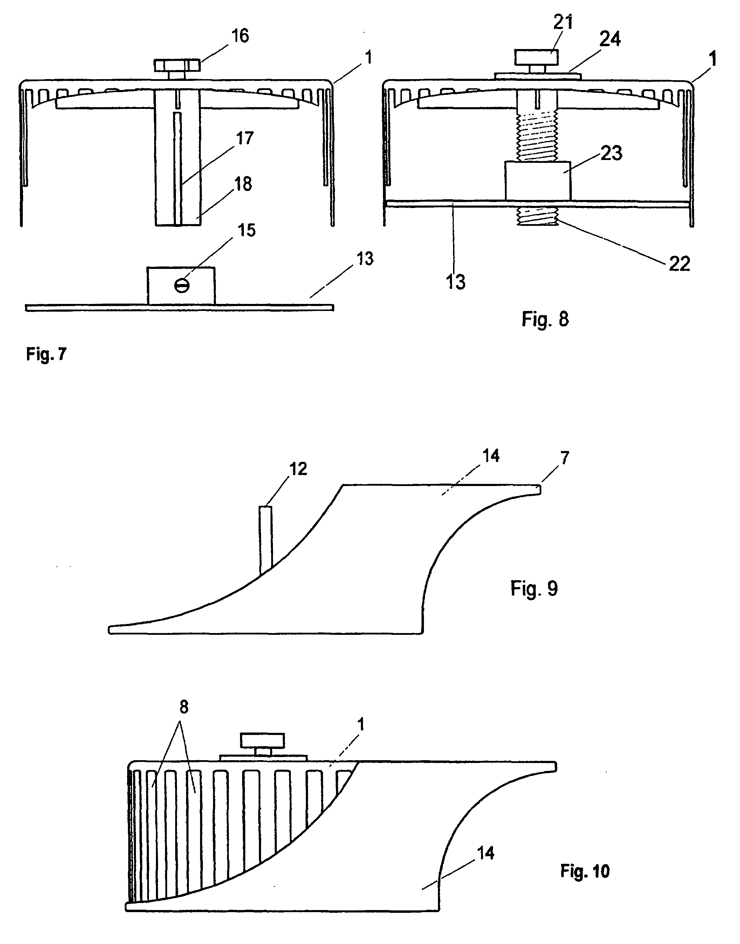

Wie dies in den Figuren 9 und 10 von der Seite gezeigt ist, ist der Rotor 1 in die Halterung 14 eingesetzt, die eine Mittelachse 12 aufweist. Bei der in Figur 7 gezeigten Ausführungsform wird auf die Mittelachse 18 des Rotors vorher der Boden 13 aufgeschoben, der in unterschiedlichen Höhen mit Hilfe einer Schraube 15 arretiert werden kann. Die Vertiefung 17 in der Mittelachse 18 des Rotors ist Verdrehschutz und gleichzeitig Sicherheit dafür, daß die Schraube 15 immer durch einen Beobachtungsschlitz hindurch verstellt werden kann, auch nach dem Zusammenbau. Die so entstandene Einheit von Rotor 1 und Boden 13 wird auf die Mittelachse 12 der Halterung 14 aufgesetzt. Der Rotor 1 wird dann schließlich mit Hilfe einer Schraube 16 auf der Mittelachse 12 gesichert.

Bei der Ausführungsform der Fig. 8 ist statt der Mittelachse 18 der Ausführungsform der Fig. 7 eine Schraubenstange 22 vorgesehen, die mit Hilfe einer Handhabe 21 gedreht werden kann. Diese Schraubenstange 22 wirkt mit einem Schraubenabschnitt 23 zusammen, der auf dem drehfest angeordneten Boden 13 befestigt ist. Durch Drehen an der Handhabe 21 kann dann die Höhe des Bodens 13 verstellt werden. Die Handhabe 21 kann dabei zusammen mit einem weiteren Element 24 zusammen als Halterung zum Einsetzen des Rotors in eine Zentrifuge dienen.

## Patentansprüche

1. Gerät zum Analysieren von Körperflüssigkeiten, die in mit einer von außen lesbaren Identifikationsmarkierung versehenen Röhrchen angeordnet sind, mit positiver Probenidentifikation an der Position, an der eine Flüssigkeitsmenge zur Analyse entnommen wird, wobei die Röhrchen in einen drehbaren Rotor (1) einsetzbar sind, **dadurch gekennzeichnet, daß** *es mindestens zwei Rotoren (1), die schubladenartig* in *das Gerät einschiebbar sind, und für jeden Rotor (1) ein seitlich angeordnetes Zahnrad (9) aufweist, über das der entsprechende Rotor antreibbar ist und* das in die am Umfang des Rotors (1) angeordneten Beobachtungsschlitze (8) eingreift, durch die die Identifikation der Röhrchen erfolgt.

2. Gerät nach Anspruch 1, **dadurch gekennzeichnet, daß** die Rotoren (1) am Umfang mit einer durch die Identifikationseinrichtung lesbaren Markierung (11) für eine Bezugsstellung (Nullstellung) versehen sind.

3. Gerät nach Anspruch 1 oder 2, **dadurch gekennzeichnet, daß** die Zahnräder (9) mit einem Positionssensor (10) versehen sind.

4. Gerät nach einem der Ansprüche 1 bis 3, **dadurch gekennzeichnet, daß** das Zahnrad (9) beim Einschieben/Herausziehen eines Rotors (1) leer mitläuft.

5. Gerät nach einem der Ansprüche 1 bis 4, **dadurch gekennzeichnet, daß** im Rotor (1) zusätzlich zu zwei konzentrisch kreisförmig angeordneten Reihen von Aufnahmeöffnungen (2) für Röhrchen, die durch die Identifikationseinrichtung identifizierbar sind, eine dritte innen kreisförmig und konzentrisch angeordnete Reihe für außerplanmäßige Untersuchungen vorgesehen ist.

6. Gerät nach einem der Ansprüche 1 bis 5, **dadurch gekennzeichnet, daß** es einen Rechner aufweist.

7. Gerät nach einem der Ansprüche 1 bis 6, **dadurch gekennzeichnet, daß** es an einen externen Rechner anschließbar ist.

8. Gerät nach einem der Ansprüche 1 bis 7, **dadurch gekennzeichnet, daß** die Rotoren (1) einen höhenverstellbaren Boden (13) aufweisen.

9. Gerät nach Anspruch 8, **dadurch gekennzeichnet, daß** der höhenverstellbare Boden (13) durch eine Schraube (15) arretierbar ist, die durch einen der Beobachtungsschlitze (8) zugänglich ist.

10. Gerät nach einem der Ansprüche 1 bis 9, **dadurch gekennzeichnet, daß** die Rotoren (1) in Halterungen (14) eingesetzt sind, die eine flache Vorderseite (5), seitliche, nach vorne zusammenlaufende Zentrierungsflächen (6) und eine Handhabe (7) aufweisen.

11. Gerät nach einem der Ansprüche 1 bis 9, **dadurch gekennzeichnet, daß** die Rotoren (1) in Halterungen (14) eingesetzt sind, die eine halbrunde Vorderseite und eine Ausnehmung aufweisen, die mit einem eine federbelastete Kugel (19) aufweisenden Vorsprung (20) des Geräts zur Winkelfestlegung zusammenwirkt und in die die Kugel (19) einrastet.

12. Gerät nach einem der Ansprüche 1 bis 8 und 10 oder 11, **dadurch gekennzeichnet, daß** durch den Boden (13) eine von oben mit einer Handhabe (21) zur Höhenverstellung drehbare Schraubenstange (22) hindurchgeht, die mit einem Gewindeabschnitt (23) im Boden zusammenwirkt.

## Claims

1. Apparatus for analysing body fluids which are contained in tubes provided with an externally readable identification marking, with positive sample identification at the position at which a quantity of fluid is removed for analysis, it being possible for the tubes to be inserted into a rotatable rotor (1), **characterized in that** it has at least two rotors (1) which can be pushed into the apparatus in a drawer-like manner and, for each rotor (1), a laterally arranged gear wheel (9) via which the corresponding rotor can be driven and which engages in the observation slits (8) which are arranged on the circumference of the rotor (1) and through which the identification of the tubes takes place.

2. Apparatus according to Claim 1, **characterized in that** the rotors (1) are provided on the circumference with a marking (11), which can be read by the identification device, for a reference position (zero position).

3. Apparatus according to Claim 1 or 2, **characterized in that** the gear wheels (9) are provided with a position sensor (10).

4. Apparatus according to one of Claims 1 to 3, **characterized in that**, as a rotor (1) is pushed in/drawn out, the gear wheel (9) idles along with it.

5. Apparatus according to one of Claims 1 to 4, **characterized in that** there is provided in the rotor (1), in addition to two rows, arranged in concentric circles, of receiving openings (2) for tubes which can be identified by the identification device, a third row, which is arranged concentrically as an inner circle, for unplanned tests.

6. Apparatus according to one of Claims 1 to 5, **characterized in that** it has a computer.

7. Apparatus according to one of Claims 1 to 6, **characterized in that** it can be connected to an external computer.

8. Apparatus according to one of Claims 1 to 7, **characterized in that** the rotors (1) have a vertically adjustable base (13).

9. Apparatus according to Claim 8, **characterized in that** the vertically adjustable base (13) can be arrested by a screw (15) which is accessible through one of the observation slits (8).

10. Apparatus according to one of Claims 1 to 9, **characterized in that** the rotors (1) are inserted in mounts (14) which have a flat front side (5), lateral centring surfaces (6), which taper to the front, and a grip (7).

11. Apparatus according to one of Claims 1 to 9, **characterized in that** the rotors (1) are inserted in mounts (14) which have a semicircular front side and a recess which interacts with a protrusion (20), which has a springloaded ball (19) and belongs to the apparatus, for angled securing and into which the ball (19) latches.

12. Apparatus according to one of Claims 1 to 8 and 10 or 11, **characterized in that** there passes through the base (13) a screw rod (22) which can be rotated from above by means of a grip (21) for the purpose of vertical adjustment and interacts with a threaded section (23) in the base.

## Revendications

1. Appareil d'analyse de liquides corporels qui sont contenus dans des éprouvettes pourvues d'un marquage d'identification lisible de l'extérieur, avec identification positive de l'échantillon à la position à laquelle est prélevée une quantité de liquide pour analyse, les éprouvettes pouvant être insérées dans un rotor (1) tournant, **caractérisé en ce qu'**il comporte au moins deux rotors (1) qui peuvent être introduits à la manière de tiroirs dans l'appareil, et pour chaque rotor (1) une roue dentée (9) disposée latéralement, par laquelle le rotor correspondant peut être entraîné et qui s'engage dans les fentes d'observation (8), disposées sur le pourtour du rotor (1), par lesquelles s'effectue l'identification des éprouvettes.

2. Appareil selon la revendication 1, **caractérisé en ce que** les rotors (1) sont pourvus sur leur pourtour d'un marquage (11) d'une position de référence (position zéro), lisible par le dispositif d'identification.

3. Appareil selon la revendication 1 ou 2, **caractérisé en ce que** les roues dentées (9) sont pourvues d'un capteur de position (10).

4. Appareil selon l'une des revendications 1 à 3, **caractérisé en ce que** la roue dentée (9) tourne à vide lors de l'introduction/extraction d'un rotor (1).

5. Appareil selon l'une des revendications 1 à 4, **caractérisé en ce que** dans le rotor (1) est prévue, outre deux rangées, disposées concentriquement en forme de cercle, d'ouvertures de réception (2) pour éprouvettes qui sont identifiables par le dispositif d'identification, une troisième rangée disposée à l'intérieur en forme de cercle et concentriquement pour des analyses non programmées.

6. Appareil selon l'une des revendications 1 à 5, **caractérisé en ce qu'**il comporte un ordinateur.

7. Appareil selon l'une des revendications 1 à 6, **caractérisé en ce qu'**il peut être connecté à un ordinateur externe.

8. Appareil selon l'une des revendications 1 à 7, **caractérisé en ce que** les rotors (1) comportent un fond (13) réglable en hauteur.

9. Appareil selon la revendication 8, **caractérisé en ce que** le fond (13) réglable en hauteur peut être bloqué par une vis (15) qui est accessible à travers l'une des fentes d'observation (8).

10. Appareil selon l'une des revendications 1 à 9, **caractérisé en ce que** les rotors (1) sont insérés dans des fixations (14) qui présentent une face avant (5) plate, des surfaces de centrage (6) latérales, se réunissant vers l'avant, et une manette (7).

11. Appareil selon l'une des revendications 1 à 9, **caractérisé en ce que** les rotors (1) sont insérés dans des fixations (14) qui présentent une face avant semi-circulaire et un évidement qui, par une saillie (20) de l'appareil comportant une bille (19) soumise à l'action d'un ressort, s'accroche dans la bille (19), en coopérant pour la fixation angulaire.

12. Appareil selon l'une des revendications 1 à 8 et 10 ou 11, **caractérisé en ce que** le fond (13) est traversé par une tige à vis (22) pouvant être vissée du haut, par une manette (21), pour le réglage en hauteur et qui coopère avec un tronçon taraudé (23) dans le fond.
